# FASCICULE DE BREVET EUROPEEN

(11) **EP 1 517 826 B1**
(45) Date de publication et mention de la délivrance du brevet: **13.09.2006**
(21) Numéro de dépôt: 03762730.4
(22) Date de dépôt: 02.07.2003
(51) Int. Cl.: B62D 27/06, B62D 25/14, B62D 65/00

(54) **ELEMENT STRUCTUREL COMPRENANT UN ECROU DE FIXATION A UN MONTANT ET VEHICULE AUTOMOBILE CORRESPONDANT**
STRUKTURELEMENT MIT EINER MUTTER ZUR BEFESTIGUNG AN EINEM PFOSTEN UND ENTSPRECHENDES KRAFTFAHRZEUG
STRUCTURAL ELEMENT COMPRISING A VERTICAL MEMBER SECURING NUT AND THE CORRESPONDING MOTOR VEHICLE

(30) Priorité: 03.07.2002 FR 0208333
(43) Date de publication de la demande: 30.03.2005
(73) Titulaire: Faurecia Interieur Industrie, 92000 Nanterre (FR)
(72) Inventeur: ARROUPE, Philippe, Faurecia Intérieur Industrie, F-60114 Meru (FR); BAUDART, Laurent, Faurecia Interieur Industrie, F-60114 Meru (FR); KUROKAWA, Tetsuji, Faurecia Intérieur Industrie, F-60114 Meru (FR)
(74) Mandataire: Domenego, Bertrand
(86) Numéro de dépôt international: PCT/FR2003/002062
(87) Numéro de publication internationale: WO 2004/005116

(56) Documents cités:
- EP-A- 0 636 800
- DE-A- 10 015 956
- FR-A- 2 766 783
- US-A- 5 492 388
- US-A- 6 062 602
- US-A- 6 062 791

## Description

La présente invention concerne un élément de structure de véhicule automobile du type comprenant une traverse et, à au moins une extrémité de la traverse, un premier écrou présentant un taraudage de réception d'une vis de fixation de la traverse à un montant du véhicule, l'axe du taraudage étant sensiblement parallèle à la ligne directrice de la traverse.

L'invention s'applique en particulier à un élément de structure destiné à supporter la planche de bord d'un véhicule automobile.

La ligne directrice de la traverse s'étend alors sensiblement le long de la direction horizontale transversale du véhicule automobile, généralement dénommée axe Y.

FR-2 770 481 et FR-2 757 473 décrivent de tels éléments de structure. Chaque écrou y est associé à un système de fixation complexe et coûteux qui ne permet pas de rattraper des jeux de fabrication orthogonaux à la ligne directrice de la traverse.

FR-2 766 783 décrit un élément de structure du type précité où l'écrou est monté à l'extrémité correspondante de la traverse par l'intermédiaire d'un organe pivotant autour d'un axe vertical par rapport à la traverse.

L'écrou est maintenu sur l'organe pivotant par des brins métalliques qui lui permettent de pivoter par rapport à l'organe autour d'un axe vertical. Ce système à double pivotement autour d'axes verticaux permet de rattraper certains jeux de fabrication orthogonaux à la ligne directrice de la traverse.

Toutefois, un tel élément de structure s'avère coûteux à réaliser en raison de la complexité du système à double pivotement.

Un but de l'invention est de résoudre ce problème en fournissant un élément du type précité qui permette de rattraper des jeux orthogonaux à la ligne directrice de la traverse et qui soit en outre de coût réduit.

A cet effet, l'invention a pour objet un élément de structure du type précité, caractérisé en ce qu'il comprend une première cage de blocage de l'écrou en rotation autour de l'axe de son taraudage, la première cage étant montée à ladite extrémité de la traverse et l'écrou pouvant se déplacer dans la première cage en translation sensiblement perpendiculairement à l'axe de son taraudage.

Selon des modes particuliers de réalisation de l'invention, l'élément peut comprendre l'une ou plusieurs des caractéristiques suivantes, prise(s) isolément ou selon toutes les combinaisons techniquement possibles :
- la première cage est montée à l'extrémité de la traverse par soudage,
- la première cage est montée à l'extrémité de la traverse par vissage,
- la première cage est montée à l'extrémité de la traverse par sertissage,
- l'élément comprend un manchon par l'intermédiaire duquel la première cage, est montée à l'extrémité de la traverse,
- l'élément comprend en outre une platine fixée au manchon et sur laquelle la cage est prévue,
- l'élément comprend un dispositif d'entretoisement destiné à coopérer avec la vis pour venir prendre appui sur l'extrémité de la traverse et sur le montant le long de la ligne directrice de la traverse,
- une liaison hélicoïdale est prévue entre la première cage et l'extrémité de la traverse, ladite liaison hélicoïdale étant de sens opposé par rapport à la liaison hélicoïdale naissant du vissage de la vis dans le premier écrou, pour que la première cage vienne prendre appui contre le montant le long de la ligne directrice de la traverse lors du vissage de la vis dans le premier écrou,
- le dispositif d'entretoisement comprend un deuxième écrou présentant un taraudage de réception de la vis, l'axe du taraudage étant sensiblement parallèle à la ligne directrice de la traverse, le dispositif d'entretoisement comprend en outre une deuxième cage de blocage du deuxième écrou en rotation autour de l'axe de son taraudage, et une liaison hélicoïdale est prévue entre la deuxième cage et l'extrémité de la traverse, ladite liaison hélicoïdale étant de sens opposé par rapport à la liaison hélicoïdale naissant du vissage de la vis dans le deuxième écrou, pour que la deuxième cage vienne prendre appui contre le montant le long de la ligne directrice de la traverse lors du vissage de la vis dans le deuxième écrou, et
- la traverse est une traverse de support d'une planche de bord du véhicule automobile.

L'invention a en outre pour objet un véhicule automobile, caractérisé en ce qu'il comprend un élément de structure tel que défini ci-dessus.

L'invention sera mieux comprise à la lecture de la description qui va suivre, donnée uniquement à titre d'exemple, et faite en se référant aux dessins annexés, sur lesquels :
- la figure 1 est une vue partielle, schématique de derrière d'une partie de la caisse d'un véhicule automobile selon un premier mode de réalisation de l'invention,
- la figure 2 est une vue schématique agrandie en coupe transversale de la partie cerclée Il de la figure 1,
- la figure 3 est une vue schématique partielle en bout prise suivant la flèche III de la figure 2,
- les figures 4 à 5 sont des vues analogues à la figure 2, illustrant deux étapes successives de la fixation de la traverse au montant de la caisse du véhicule de la figure 1,
- les figures 6 et 7 sont des vues partielles, schématiques et en coupe longitudinale d'extrémités de traverses selon deux variantes du mode de réalisation des figures 1 à 5,
- la figure 8 est une vue analogue à la figure 2 illustrant un deuxième mode de réalisation de l'invention,
- la figure 9 est une vue analogue à la figure 8 avant fixation de la traverse sur le montant,
- la figure 10 est une vue analogue à la figure 2 illustrant un troisième mode de réalisation de l'invention, et

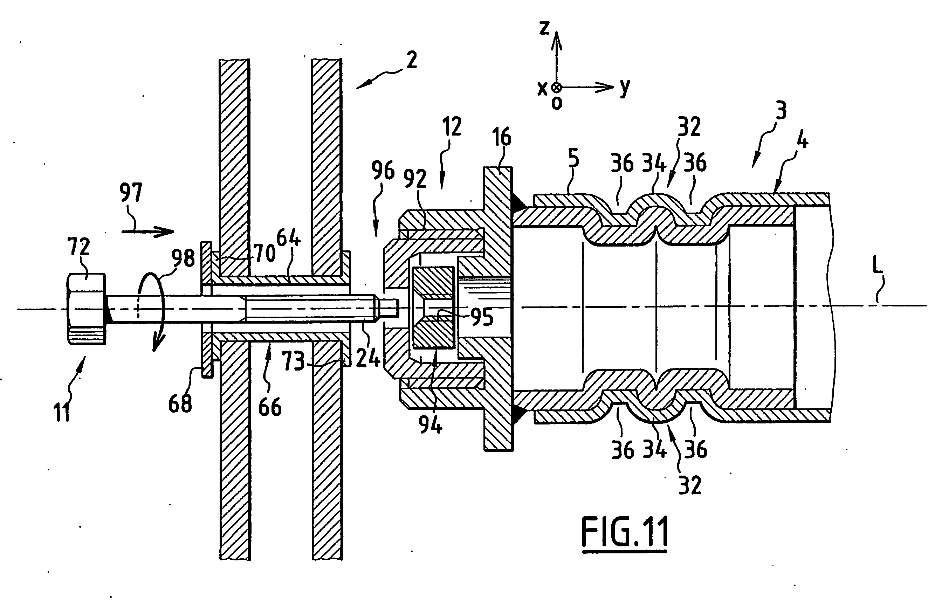

- la figure 11 est une vue analogue à la figure 10 avant fixation de la traverse sur le montant.

Dans tout ce qui suit, les orientations utilisées sont les orientations habituelles d'un véhicule automobile. Ainsi, les termes « avant », « arrière », « droite » et « gauche » s'entendent par rapport au sens de marche du véhicule et à la position d'un conducteur.

Pour faciliter la description, on a représenté sur les figures un repère orthonormé Oxyz conformément à la terminologie généralement utilisée dans le domaine automobile.

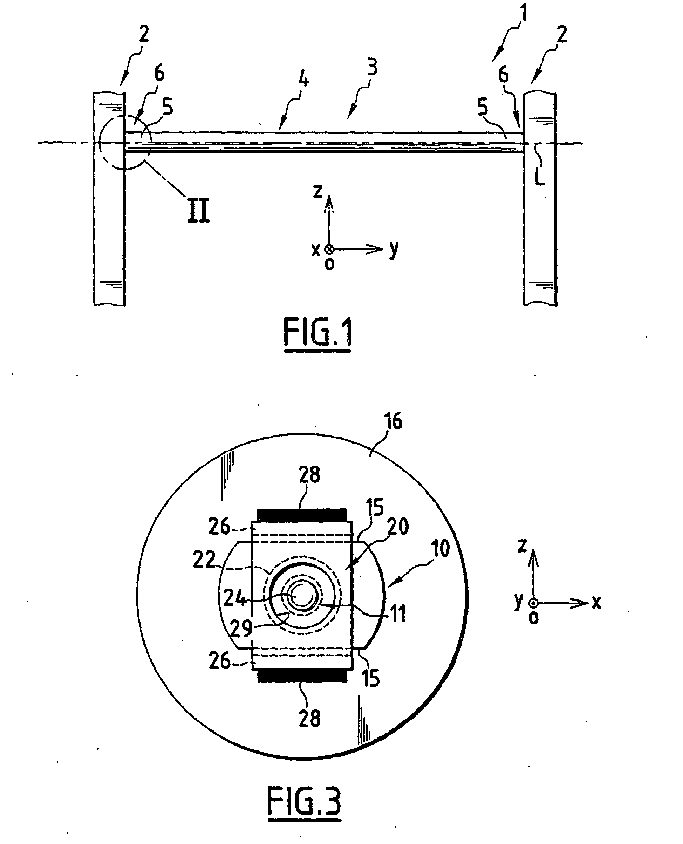

La figure 1 illustre schématiquement une partie de la caisse 1 d'un véhicule automobile qui comprend deux montants latéraux 2 sensiblement verticaux et un élément structurel 3 reliant les deux montants 2.

Typiquement, les montants 2 sont les montants dits A. Ces montants 2 sont situés entre les ailes de la carrosserie du véhicule automobile et les portes avant du véhicule.

L'élément structurel 3 comprend une traverse 4 qui s'étend le long d'une ligne directrice L sensiblement parallèle la direction Oy transversale et horizontale.

Cette traverse 4 est par exemple un tube métallique de section circulaire.

Les extrémités latérales 5 de la traverse 4 sont fixées chacune à un montant 2 par l'intermédiaire de systèmes de fixation 6.

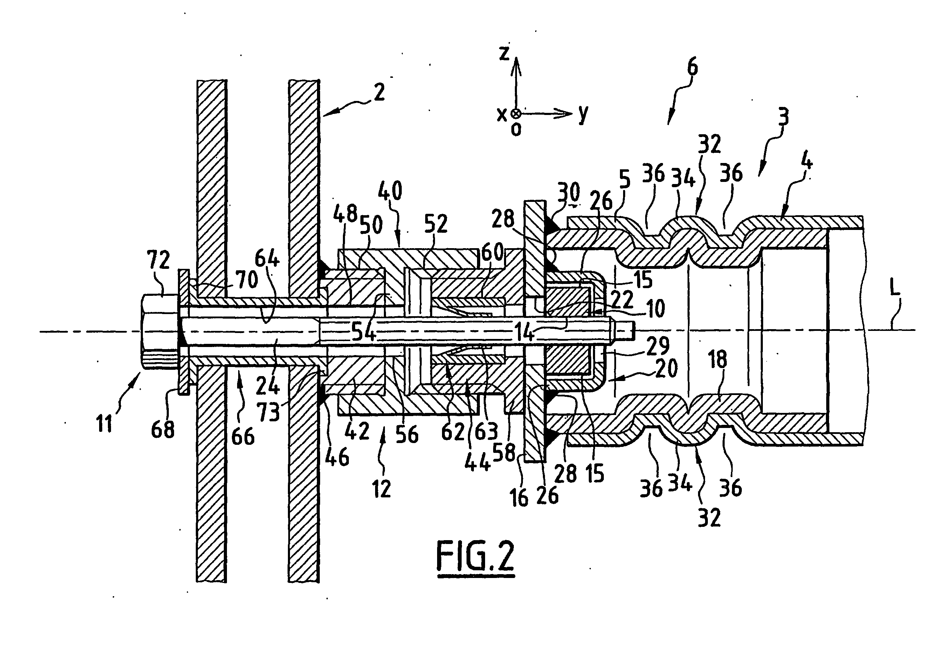

Les systèmes de fixation 6 ayant des structures sensiblement symétriques par rapport au plan vertical médian parallèle au plan Oxz, seule la structure du système 6 gauche et sa coopération avec le montant 2 gauche seront décrits dans ce qui suit par référence aux figures 2 à 5.

Le système de fixation 6 comprend :
- un écrou 10 associé à l'extrémité 5 de la traverse 4, et
- une vis 11 et un dispositif d'entretoisement 12 associés au montant 2.

Un taraudage central 14 d'axe sensiblement confondu avec la ligne L est ménagé dans l'écrou 10. L'écrou 10 présente sur sa surface périphérique deux méplats 15 opposés.

L'écrou 10 est monté à l'extrémité latérale 5 de la traverse 4 par l'intermédiaire d'une platine 16, d'un manchon 18 et d'une cage anti-rotation 20.

La platine 16 est sensiblement circulaire et présente un orifice central 22 de passage de la tige 24 de la vis 11. L'orifice 22 a un diamètre supérieur à celui de la tige 24. La tige 24 est filetée extérieurement avec un filet orienté vers la droite.

La cage anti-rotation 20 est formée par une bande métallique dont les extrémités 26 sont repliées latéralement vers l'extérieur, c'est à dire vers la gauche sur la figure 2, pour que la cage 20 ait sensiblement une forme de U orienté vers la gauche sur la figure 2.

Les extrémités 26 de la cage anti-rotation 20 sont fixées, par exemple par des soudures 28, sur la face droite de la platine 26. Un orifice 29 de passage de la tige 24 de la vis 11 est ménagé dans la région centrale de la cage 20, en regard du taraudage 14. Cet orifice 29 a un diamètre supérieure à celui de la tige 24.

Les extrémités 26 de la cage 20 sont disposés en regard des méplats 15 pour qu'ils prennent appui sur les extrémités 26 lorsque l'écrou 10 tend à pivoter autour de l'axe de son taraudage 14 par rapport à la cage 20. Les extrémités 26 de la cage 20 retiennent ainsi l'écrou 10 contre une rotation autour de la ligne directrice L.

La cage 20 chevauche l'écrou 10 avec un jeu vertical, c'est-à-dire suivant la direction Oz, de l'ordre de 4 mm entre chaque extrémité 26 et le méplat 15 correspondant.

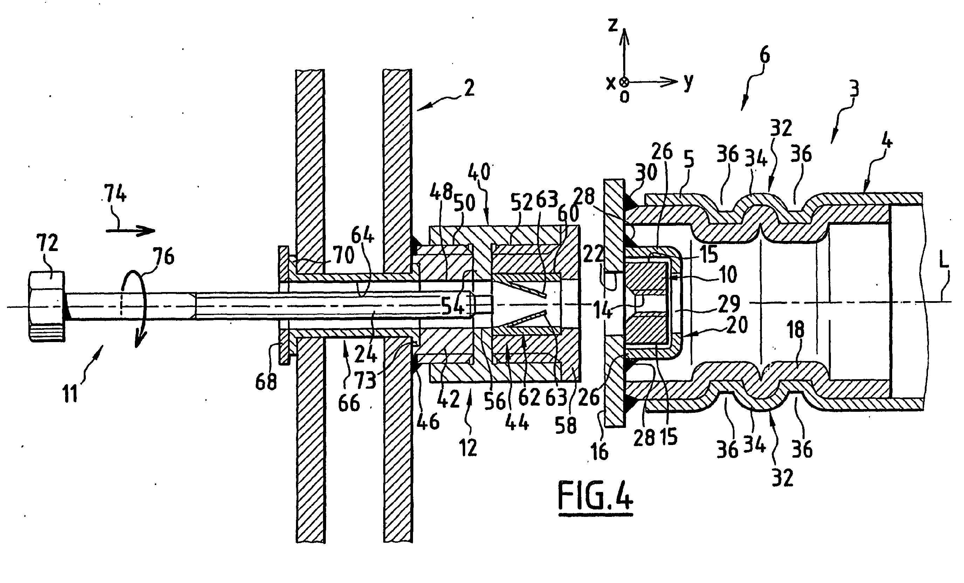

La cage 20 ne s'étend pas en avant et en arrière de l'écrou 10, c'est-à-dire à droite et à gauche sur la figure 3. Ainsi, l'écrou 10 peut se déplacer librement en translation le long de la direction Ox par rapport à la cage 20 et à la platine 16.

Ainsi, l'écrou 10 est flottant dans la cage 20 et peut se déplacer en translation par rapport à celui-ci perpendiculairement à l'axe L de son taraudage 14, à la fois selon la direction Ox et selon la direction Oz.

Le manchon 18 est un manchon métallique initialement cylindrique circulaire qui est soudé à la platine 16 par un cordon 30. Le manchon 18 entoure la cage 20 et prolonge la platine 16 vers la droite.

Le manchon 18 est reçu dans l'extrémité 5 de la traverse 4. Le manchon 18 est fixé à la traverse 4 par sertissage. Ce sertissage s'effectue par exemple en deux régions 32 diamétralement opposées. Chaque région 32 est par exemple d'étendue angulaire d'environ 120° autour de la ligne directrice L. Ce sertissage forme dans chaque région 32 un bourrelet 34 et deux rainures 36 disposées latéralement de part et d'autre du bourrelet 34.

Grâce à ce sertissage, la cage 20 est fixée à l'extrémité 5 de la traverse 4.

Le dispositif d'entretoisement 12 comprend :
- un corps de base 40,
- une douille 42 de montage du corps 40 sur le montant 2, et
- un élément 44 d'appui sur la platine 16.

La douille 42 est fixée sur la face latéralement intérieure du montant 2 par exemple par une soudure 46. Cette douille 42 est filetée extérieurement avec un filet à gauche. La douille 42 présente également un orifice central 48 de passage de la tige 24 de la vis 11. Le diamètre de l'orifice 48 est supérieur à celui de la tige 24.

Le corps de base 40 a une forme sensiblement cylindrique et présente un alésage gauche 50 et un alésage droit 52 séparés par une cloison 54 percée d'un orifice central 56 de passage de la tige 24. Les alésages gauche 50 et droit 52 sont taraudés avec des filets en sens opposés. La douille 42 est vissée dans l'alésage gauche 50 du corps de base 40.

L'élément d'appui 44 est fileté extérieurement avec un filet à droite, et vissé dans l'alésage avant 52 du corps de base 40.

L'extrémité droite de l'élément d'appui 44 comprend un disque 58 de diamètre supérieur au reste de l'élément 44 et destiné à prendre appui sur la face latérale gauche de la platine 16.

Un alésage central étagé 60 est ménagé dans l'élément d'appui 44. Des moyens 62 d'entraînement en rotation de l'élément 44, par exemple sous forme d'une bague métallique munie de lames élastiques 63, sont logés dans l'alésage 60. Ces moyens 62 permettent l'insertion vers la droite de la tige 24 de la vis 11 mais frottent sur celle-ci pour être entraînés en rotation avec elle. Les moyens 62 d'entraînement en rotation sont fixés, par exemple par encliquetage, à l'élément d'appui 44 pour lui transmettre un mouvement de rotation de la vis 11 autour de la ligne L.

La tige 24 de la vis 11 traverse le montant 2 via l'alésage central 64 d'une pièce 66 prévue dans le montant 2. Une rondelle 68 est disposée entre un flasque gauche 70 de la pièce 66 et la tête 72 de la vis 11. La pièce 66 possède également un flasque droit 73 disposé entre la douille 42 et la face latérale droite du montant 2.

Les flasques 70 et 73 de la pièce 66 enserrent le montant 2.

Pour monter l'extrémité 5 gauche de la traverse 4 sur le montant 2 gauche, on procède par exemple comme suit.

On visse tout d'abord le corps de base 40 sur la douille 42 préalablement fixée au montant 2. L'élément d'appui 44 du dispositif d'entretoisement 12 est alors complètement vissé dans l'alésage droit 52 du corps de base 40, comme représenté à la figure 4. Le disque droit 58 de l'élément 44 prend alors appui latéralement contre la tranche droite du corps de base 40.

L'extrémité 5 de la traverse 4 préalablement fixée au manchon 18 est disposée en regard du dispositif d'entretoisement 12. La tige 24 de la vis 11 est introduite dans la pièce 66 et dans la douille de montage 42 jusqu'à ce que son extrémité droite soit disposée à l'entrée des moyens 62 d'entraînement en rotation.

Ensuite, on exerce une poussée horizontale vers la droite sur la vis 11, comme illustré par la flèche 74 sur la figure 4, et on entraîne la vis 11 en rotation autour de la ligne directrice L dans le sens horaire, comme illustré par la flèche 76.

L'extrémité droite avant de la tige 24 de la vis 11 pénètre alors dans la bague 62 en comprimant radialement les lames 63.

L'élément d'appui 44 est alors entraîné en rotation par la vis 11, par l'intermédiaire de la bague 62.

Le corps de base 40 et la douille 42 restent quant à eux fixes par rapport au montant 2 gauche.

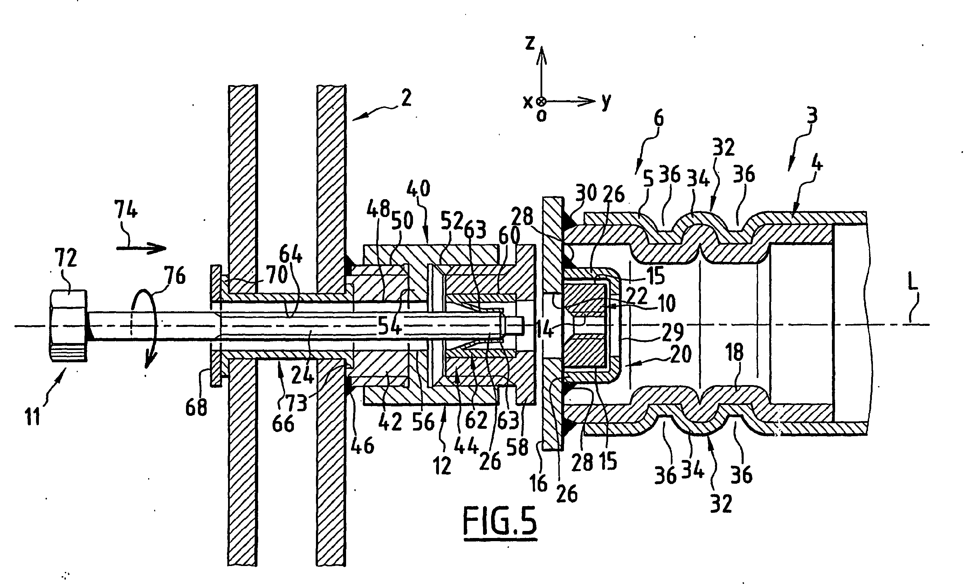

Du fait du mouvement de rotation relatif entre le corps de base 40 et l'élément d'appui 44, et du fait de la coopération entre le filetage de l'élément 44 et le taraudage de l'alésage 52, l'élément d'appui 44 est animé d'un mouvement de translation latérale vers la droite sensiblement parallèle à la ligne directrice L, comme illustré par la figure 5.

Ce mouvement se poursuit jusqu'à ce que le disque 58 de l'élément d'appui 44 vienne prendre appui latéralement contre la platine 16.

Le dispositif d'entretoisement 12 prend alors appui latéralement sur le montant 2 et la platine 16 en supprimant le jeu transversal le long de la direction Oy.

Le mouvement de rotation de la vis 11 se poursuit et la vis 11 s'avance vers la droite au travers de la bague 62 jusqu'à ce que l'extrémité droite de la tige 24 vienne en prise dans le taraudage 14 de l'écrou 10. La cage 20 empêche alors l'écrou 10 de tourner autour de l'axe de son taraudage 14 et permet la naissance d'un effort latéral de serrage.

La rotation de la vis 11 se poursuit jusqu'à l'obtention d'un effort prédéterminé de serrage latéral de la traverse 4 contre le montant 2 via le dispositif d'entretoisement 12.

Ainsi, l'extrémité latérale 5 gauche de la traverse 4 est fixée fermement le long de la direction transversale Oy par rapport au montant 2.

Au cours du montage décrit précédemment, la possibilité du déplacement en translation dans le plan Oxz de l'écrou 10 dans la cage 20 permet de rattraper les jeux de fabrication et donc d'obtenir un serrage satisfaisant selon la direction Oy.

L'utilisation d'une cage anti-rotation 20 dans laquelle l'écrou peut se déplacer en translation orthogonalement à la ligne directrice L permet donc de rattraper des jeux de fabrication orthogonaux à cette ligne directrice.

Pour autant, le coût de l'élément structurel 3 est faible puisqu'il ne fait intervenir, pour rattraper ces jeux, qu'une cage anti-rotation 20 dans laquelle l'écrou 10 est monté flottant suivant au moins une direction orthogonale à la ligne directrice L.

La fixation du manchon 18 à l'extrémité 5 de la traverse 4 peut être assurée autrement que par sertissage.

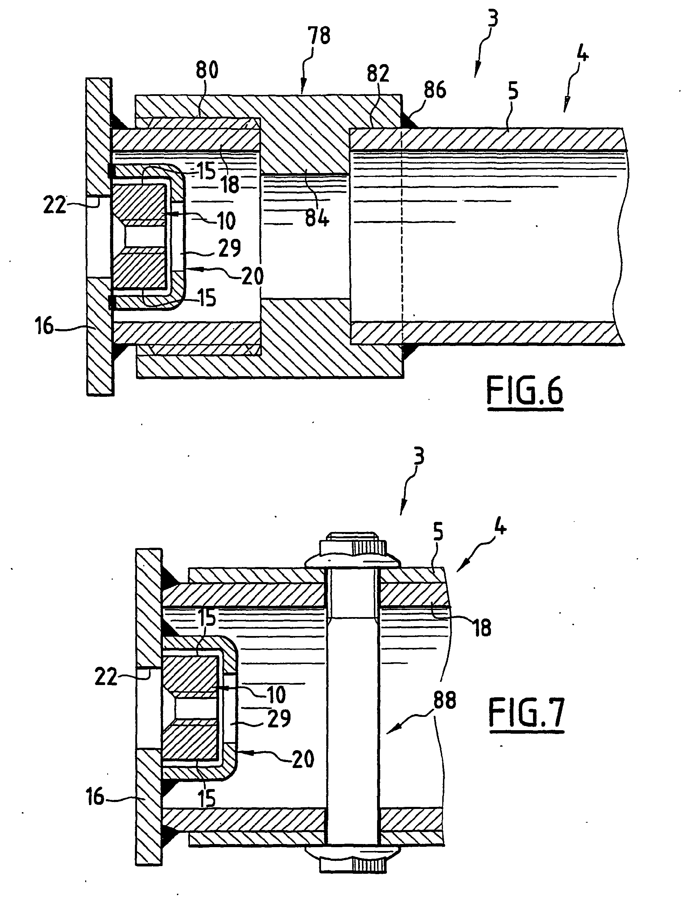

La figure 6 illustre ainsi une variante dans laquelle la fixation est assurée grâce à une douille intermédiaire 78. Cette douille 78 présente un alésage gauche 80 et un alésage droit 82 séparés par un épaulement 84. L'alésage gauche 80 est taraudé.

Le manchon 18 est fileté extérieurement et il est vissé dans l'alésage gauche 80 de la douille 78. Le filet du manchon 18 est orienté à droite.

L'extrémité gauche 5 de la traverse 4 est engagée dans l'alésage droit 82 de l'organe 78 et soudée à celui-ci par exemple par un cordon 86.

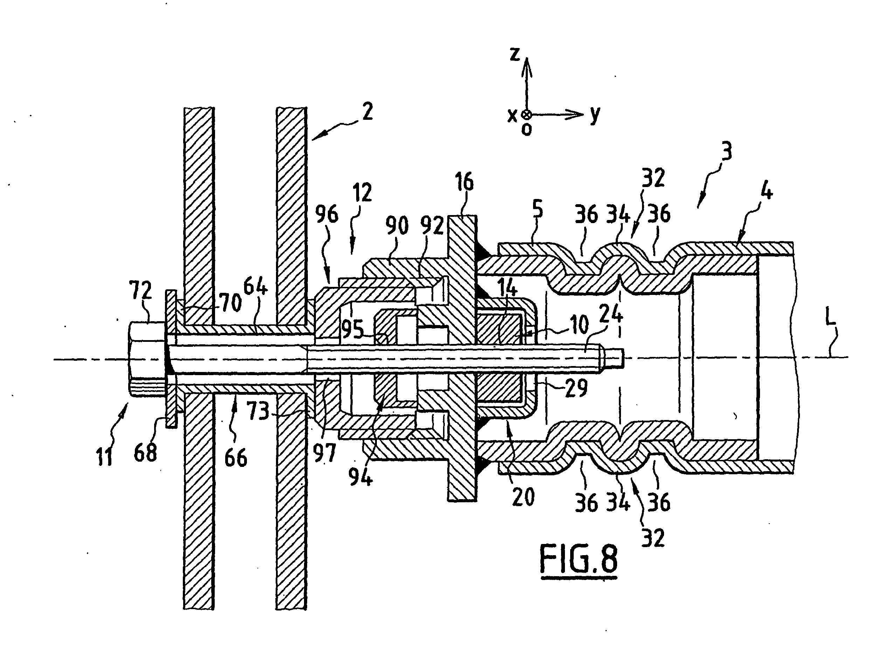

Dans la variante de la figure 7, la fixation entre le manchon 18 et l'extrémité 5 de la traverse 4 est assurée par un boulon 88 qui traverse le manchon 18 et l'extrémité 5 et qui s'étend par exemple verticalement.

Dans d'autres variantes non-représentées, la fixation du manchon 18 à l'extrémité 5 peut être assurée par exemple par rivetage ou par soudage.

Les différents modes de fixation précités peuvent être combinés.

Le deuxième mode de réalisation illustré par la figure 8 se distingue du premier essentiellement par ce qui suit.

Le dispositif d'entretoisement 12 est porté par la face latérale gauche de la platine 16.

Plus précisément, le dispositif d'entretoisement 12 comprend une douille 90 venue de matière avec la platine 16 et prolongeant celle-ci vers la gauche. Cette douille 90 présente un taraudage 92 d'axe sensiblement confondu avec la ligne directrice L.

Le dispositif d'entretoisement 12 comprend également un deuxième écrou 94, muni d'un taraudage 95 sensiblement centré sur la ligne L, et une deuxième cage anti-rotation 96 dans laquelle le deuxième écrou 94 est disposé. Le deuxième écrou 94 et la cage anti-rotation 96 sont solidaires en rotation autour de l'axe L mais le deuxième écrou 94 peut se déplacer en translation dans la cage 96 le long des directions Ox, Oy et Oz.

La cage anti-rotation 96 est filetée extérieurement vers la gauche et elle est vissée dans l'alésage 92 de la douille 90.

Ainsi, une liaison hélicoïdale est créée entre la cage anti-rotation 96 et l'extrémité 5 de la traverse pour transformer une rotation de la cage 96 en un mouvement de translation, comme décrit par la suite.

La cage anti-rotation 96 comprend un orifice central 97 qui entoure à distance la tige 24 de la vis 11.

Pour fixer l'extrémité 5 gauche de la traverse 4 au montant 2 on procède par exemple comme suit.

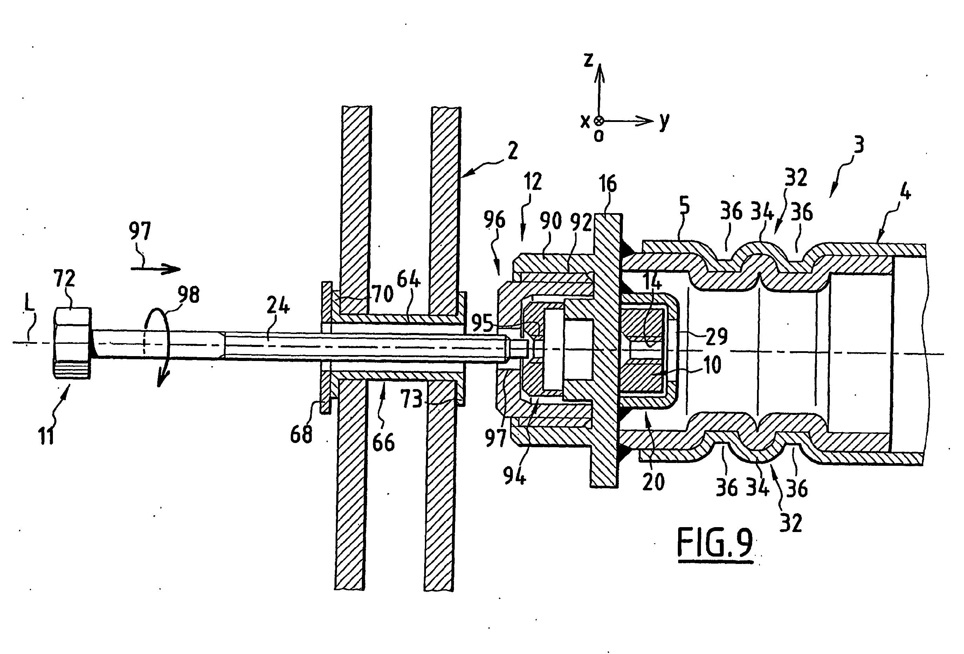

On vient disposer l'extrémité 5 gauche de la traverse 4, préalablement munie de la platine 16 et donc du dispositif d'entretoisement 12, en regard de la tige 24 de la vis 11 préalablement engagée dans la pièce 66. Cela est illustré par la figure 9.

Ensuite, on pousse la vis 11 vers la droite, comme matérialisé par la flèche 97, tout en l'entraînant en rotation autour de la ligne L dans le sens horaire, comme matérialisé par la flèche 98. L'extrémité avant de la tige 24 vient ainsi en prise avec le taraudage 95 du deuxième écrou 94.

En raison du frottement entre la tige 24 de la vis 11 et l'écrou 94, l'écrou 94 est entraîné en rotation dans le sens horaire tout comme la cage 96 qui est fixe en rotation par rapport à l'écrou 94.

Ce mouvement de rotation provoque une translation vers la gauche de la cage anti-rotation 96 en raison de l'orientation du taraudage de l'alésage 92 et du filetage extérieur de la cage 96.

La cage 96 se déplace vers la gauche jusqu'à ce qu'elle prenne appui latéralement sur le montant 2 par l'intermédiaire du flasque droit 73 de la pièce 66.

Le dispositif d'entretoisement 12 s'étend alors entre la platine 16 et le montant 2.

La rotation de la vis 11 se poursuit et celle-ci se déplace latéralement vers la droite en raison de la coopération avec le taraudage de l'écrou 94 qui est maintenant fixe en rotation du fait de l'appui de la cage 96 sur la pièce 66.

La tige 24 se déplace latéralement vers la droite jusqu'à venir en prise avec le taraudage 14 de l'écrou 10.

La vis 11 va alors faire naître un effort de serrage transversal, orienté selon la direction Oy, de l'extrémité 5 gauche de la traverse 4 contre le montant 2. Lorsqu'un effort de serrage désiré est atteint, on arrête la rotation de la vis 11.

On est alors dans la configuration de la figure 8. L'extrémité 5 gauche de la traverse est fermement fixée transversalement au montant 2. La caisse 1 ainsi obtenue permet de résister aux contraintes apparaissant lors de chocs du véhicule contre des obstacles.

En outre, lors d'un tel choc, le point le plus sollicité de la liaison entre le montant 2 et la traverse 4 se situe au niveau du premier écrou 10.

Ainsi, seul le taraudage 14 de l'écrou 10 doit être adapté pour supporter de telles sollicitations. Le taraudage 95 de l'écrou 94 peut quant à lui être un taraudage de résistance mécanique moyenne de sorte que le déploiement du dispositif d'entretoisement 12 n'est pas gêné.

En outre, le montage flottant de l'écrou 10 dans la cage anti-rotation 20 et de l'écrou 94 dans la cage anti-rotation 96 permet de rattraper les jeux selon les directions Ox et Oz.

L'élément structurel 3 des figures 8 et 9 est donc de coût réduit.

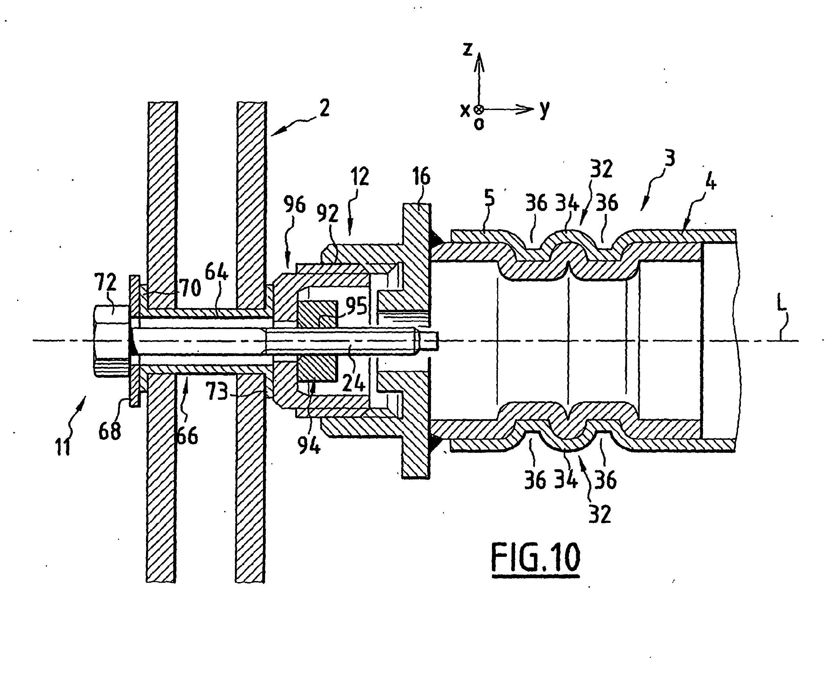

La figure 10 illustre un troisième mode de réalisation qui est de coût encore plus réduit.

Ce mode de réalisation se distingue de celui décrit en regard des figures 8 et 9 en ce que la première cage anti-rotation 20 et le premier écrou 10 ont été supprimés.

Le serrage le long de la ligne directrice L est alors assuré par l'écrou 94 qui est flottant dans la cage anti-rotation 96. Le montage de l'extrémité 5 sur le montant 4 est alors dans un premier temps analogue à celui décrit en regard des figures 8 et 9.

Lorsque la bague anti-rotation 96 s'appuie transversalement contre le montant 2, la rotation de la vis 11 se poursuit jusqu'à ce que sa tête 72 vienne prendre appui sur la rondelle 68 et l'écrou 94 s'appuie transversalement sur la cage 96. Le serrage transversal débute alors et est interrompu lorsqu'un couple souhaité est atteint.

Ce mode de réalisation, qui fait intervenir deux pièces de moins que le mode de réalisation des figures 8 et 9, s'avère moins coûteux. Toutefois, les contraintes les plus importantes apparaissent en cas d'accident, dans la tige 24 au droit de l'écrou 94. L'écrou 94 doit alors assurer une fonction de reprise d'efforts qui impose à son taraudage 94 des contraintes de réalisation, par exemple sur le pas de son filet qui peuvent conduire à un déploiement du dispositif 12 plus lent.

Les principes décrits ci-dessus peuvent s'appliquer à la réalisation d'autres éléments structurels 3 que ceux comprenant une traverse 4 de support d'une planche de bord. Ils peuvent notamment être utilisés pour la réalisation de sièges ou de lignes d'échappement de véhicule automobile.

## Revendications

1. Elément (3) de structure de véhicule automobile du type comprenant une traverse (4) et, à au moins une extrémité (5) de la traverse, un premier écrou (10 ; 10, 94 ; 94) présentant un taraudage (14 ; 14, 95 ; 95) de réception d'une vis (11) de fixation de la traverse à un montant (2) du véhicule, l'axe du taraudage étant sensiblement parallèle à la ligne directrice (L) de la traverse, **caractérisé en ce que** l'élément comprend une première cage (20 ; 20, 96 ; 96) de blocage de l'écrou (10) en rotation autour de l'axe de son taraudage, la première cage (20 ; 20, 96 ; 96) étant montée à ladite extrémité (5) de la traverse et l'écrou (10) pouvant se déplacer dans la première cage en translation sensiblement perpendiculairement à l'axe de son taraudage.

2. Elément selon la revendication 1, **caractérisé en ce que** la première cage (20) est montée à l'extrémité (5) de la traverse par soudage.

3. Elément selon la revendication 1 ou 2, **caractérisé en ce que** la première cage (20) est montée à l'extrémité (5) de la traverse (4) par vissage.

4. Elément selon l'une des revendications précédentes, **caractérisé en ce que** la première cage (20 ; 20, 96 ; 96) est montée à l'extrémité (5) de la traverse (4) par sertissage.

5. Elément selon l'une des revendications précédentes, **caractérisé en ce qu'**il comprend un manchon (18) par l'intermédiaire duquel la première cage (20) est montée à l'extrémité (5) de la traverse (4).

6. Elément selon la revendication 5, **caractérisé en ce qu'**il comprend en outre une platine (16) fixée au manchon (18) et sur laquelle la cage (20) est prévue.

7. Elément selon l'une des revendications précédentes, **caractérisé en ce qu'**il comprend un dispositif d'entretoisement (12) destiné à coopérer avec la vis (11) pour venir prendre appui sur l'extrémité (5) de la traverse (4) et sur le montant (2) le long de la ligne directrice (L) de la traverse (4).

8. Elément selon la revendication 7, **caractérisé en ce qu'**une liaison hélicoïdale est prévue entre la première cage (96) et l'extrémité (5) de la traverse (4), ladite liaison hélicoïdale étant de sens opposé par rapport à la liaison hélicoïdale naissant du vissage de la vis (11) dans le premier écrou (94), pour que la première cage (96) vienne prendre appui contre le montant (2) le long de la ligne directrice (L) de la traverse (4) lors du vissage de la vis (11) dans le premier écrou (94).

9. Elément de structure selon la revendication 7, **caractérisé en ce que** le dispositif d'entretoisement (12) comprend un deuxième écrou (94) présentant un taraudage (95) de réception de la vis (11), l'axe du taraudage étant sensiblement parallèle à la ligne directrice (L) de la traverse (4), **en ce que** le dispositif d'entretoisement (12) comprend en outre une deuxième cage (96) de blocage du deuxième écrou (94) en rotation autour de l'axe de son taraudage (95), et **en ce qu'**une liaison hélicoïdale est prévue entre la deuxième cage (96) et l'extrémité (5) de la traverse (4), ladite liaison hélicoïdale étant de sens opposé par rapport à la liaison hélicoïdale naissant du vissage de la vis (11) dans le deuxième écrou, pour que la deuxième cage (96) vienne prendre appui contre le montant (2) le long de la ligne directrice (L) de la traverse (4) lors du vissage de la vis (11) dans le deuxième écrou (94).

10. Elément de structure selon l'une des revendications précédentes, **caractérisé en ce que** la traverse (4) est une traverse de support d'une planche de bord du véhicule automobile.

11. Véhicule automobile, **caractérisé en ce qu'**il comprend un élément de structure selon l'une des revendications précédentes.

## Claims

1. Structural element (3) of a motor vehicle, of the type comprising a cross-member (4) and, at at least one end (5) of the cross-member, a first nut (10; 10, 94; 94) having an internal screw thread (14; 14, 95; 95) for receiving a bolt (11) for fixing the cross-member to a vertical member (2) of the vehicle, the axis of the internal screw thread being substantially parallel to the directrix (L) of the cross-member, **characterised in that** the element comprises a first cage (20; 20, 96; 96) for preventing rotation of the nut (10) around the axis of its internal screw thread, the first cage (20; 20, 96; 96) being mounted at said end (5) of the cross-member and the nut (10) being capable of translational movement in the first cage substantially perpendicularly to the axis of its internal screw thread.

2. Element according to claim 1, **characterised in that** the first cage (20) is mounted at the end (5) of the cross-member (4) by welding.

3. Element according to claim 1 or 2, **characterised in that** the first cage (20) is mounted at the end (5) of the cross-member (4) by screwing.

4. Element according to any one of the preceding claims, **characterised in that** the first cage (20; 20, 96; 96) is mounted at the end (5) of the cross-member (4) by crimping.

5. Element according to any one of the preceding claims, **characterised in that** it comprises a sleeve (18) by way of which the first cage (20) is mounted at the end (5) of the cross-member (4).

6. Element according to claim 5, **characterised in that** it further comprises a plate (16) which is fixed to the sleeve (18) and on which the cage (20) is provided.

7. Element according to any one of the preceding claims, **characterised in that** it comprises a bracing device (12) for cooperating with the bolt (11) in order to rest on the end (5) of the cross-member (4) and on the vertical member (2) along the directrix (L) of the cross-member (4).

8. Element according to claim 7, **characterised in that** a helical connection is provided between the first cage (96) and the end (5) of the cross-member (4), said helical connection having the opposite direction relative to the helical connection resulting from the screwing of the bolt (11) into the first nut (94), so that the first cage (96) rests on the vertical member (2) along the directrix (L) of the cross-member (4) during screwing of the bolt (11) into the first nut (94).

9. Structural element according to claim 7, **characterised in that** the bracing device (12) comprises a second nut (94) having an internal screw thread (95) for receiving the bolt (11), the axis of the internal screw thread being substantially parallel to the directrix (L) of the cross-member (4), **in that** the bracing device (12) further comprises a second cage (96) for preventing rotation of the second nut (94) around the axis of its internal screw thread (95), and **in that** a helical connection is provided between the second cage (96) and the end (5) of the cross-member (4), said helical connection having the opposite direction relative to the helical connection resulting from the screwing of the bolt (11) into the second nut, so that the second cage (96) rests on the vertical member (2) along the directrix (L) of the cross-member (4) during screwing of the bolt (11) into the second nut (94).

10. Structural element according to any one of the preceding claims, **characterised in that** the cross-member (4) is a cross-member supporting an instrument panel of the motor vehicle.

11. Motor vehicle, **characterised in that** it comprises a structural element according to any one of the preceding claims.

## Patentansprüche

1. Kraftfahrzeug-Strukturelement (3) von dem Typ, welcher einen Querträger (4) und an mindestens einem Ende (5) des Querträgers eine erste Mutter (10; 10, 94; 94) aufweist, welche ein Innengewinde (14; 14, 95; 95) zum Aufnehmen einer Schraube (11) zum Befestigen des Querträgers an einer Säule (2) des Fahrzeugs aufweist, wobei die Achse des Innengewindes im wesentlichen parallel zu der Ausrichtung (L) des Querträgers ist, **dadurch gekennzeichnet, dass** das Element einen ersten Aufsatz (20; 20, 96; 96) zum Blockieren des Drehens der Mutter (10) um die Achse ihres Innengewindes herum aufweist, wobei der erste Aufsatz (20; 20, 96; 96) an dem Ende (5) des Querträgers angebracht ist und die Mutter (10) in dem ersten Aufsatz im wesentlichen senkrecht zur Achse ihres Innengewindes translatorisch verschiebbar ist.

2. Element gemäß Anspruch 1, **dadurch gekennzeichnet, dass** der erste Aufsatz (20) an dem Ende (5) des Querträgers durch Schweißen angebracht ist.

3. Element gemäß Anspruch 1 oder 2, **dadurch gekennzeichnet, dass** der erste Aufsatz (20) an dem Ende (5) des Querträgers (4) durch Verschrauben angebracht ist.

4. Element gemäß einem der vorhergehenden Ansprüche, **dadurch gekennzeichnet, dass** der erste Aufsatz (20; 20, 96; 96) an dem Ende (5) des Querträgers (4) durch Sicken angebracht ist.

5. Element gemäß einem der vorhergehenden Ansprüche, **dadurch gekennzeichnet, dass** dieses eine Muffe (18) aufweist, mittels welcher der erste Aufsatz (20) an dem Ende (5) des Querträgers (4) angebracht ist.

6. Element gemäß Anspruch 5, **dadurch gekennzeichnet, dass** dieses außerdem eine an der Muffe (18) angebrachte Platte (16) aufweist, an welcher der Aufsatz (20) vorgesehen ist.

7. Element gemäß einem der vorhergehenden Ansprüche, **dadurch gekennzeichnet, dass** dieses eine Verankerungs-Vorrichtung (12) aufweist, welche mit der Schraube (11) zum Anliegen an dem Ende (5) des Querträgers (4) und an der Säule (2) entlang der Ausrichtung (L) des Querträgers zusammenwirkt.

8. Element gemäß Anspruch 7, **dadurch gekennzeichnet, dass** eine Schraubverbindung zwischen dem ersten Aufsatz (96) und dem Ende (5) des Querträgers (4) vorgesehen ist, welche gegensinnig zu der Schraubverbindung zwischen der Schraube (11) und der ersten Mutter (94) ausgebildet ist, so dass durch Verschrauben der Schraube (11) in der ersten Mutter (94) der erste Aufsatz (96) an der Säule (2) entlang der Ausrichtung (L) des Querträgers (4) abgestützt wird.

9. Strukturelement gemäß Anspruch 7, **dadurch gekennzeichnet, dass** die Verankerungs-Vorrichtung (12) eine zweite Mutter (94) aufweist, welche ein Innengewinde (95) zum Aufnehmen der Schraube (11) aufweist, wobei die Achse des Innengewindes im wesentlichen parallel zu der Ausrichtung (L) des Querträgers (4) ist, wobei die Verankerungs-Vorrichtung (12) außerdem einen zweiten Aufsatz (96) zum Blockieren des Drehens der zweiten Mutter (94) um die Achse ihres Innengewindes(95) herum aufweist, und dass eine Schraubverbindung zwischen dem zweiten Aufsatz (96) und dem Ende (5) des Querträgers (4) vorgesehen ist, welche gegensinnig zu der Schraubverbindung zwischen der Schraube (11) und der zweiten Mutter ausgebildet ist, so dass durch Verschrauben der Schraube (11) in der zweiten Mutter (94) der zweite Aufsatz (96) an der Säule (2) entlang der Ausrichtung (L) des Querträgers (4) abgestützt wird.

10. Strukturelement gemäß einem der vorhergehenden Ansprüche, **dadurch gekennzeichnet, dass** der Querträger (4) ein Stütz-Querträger einer Seitenplatte eines Kraftfahrzeuges ist.

11. Kraftfahrzeug, **dadurch gekennzeichnet, dass** es ein Struktur-Element gemäß einem der vorhergehenden Ansprüche aufweist.
